# EUROPÄISCHE PATENTSCHRIFT

(11) **EP 2 909 500 B1**
(45) Veröffentlichungstag und Bekanntmachung des Hinweises auf die Patenterteilung: **15.08.2018**
(21) Anmeldenummer: 13765958.7
(22) Anmeldetag: 20.09.2013
(51) Int. Cl.: F16F 15/03, H02K 49/04

(54) **ELEKTRISCHER DÄMPFER FÜR EIN KRAFTFAHRZEUG**
ELECTRIC DAMPER FOR A MOTOR VEHICLE
AMORTISSEUR ÉLECTRIQUE POUR UN VÉHICULE À MOTEUR

(30) Priorität: 18.10.2012 DE 102012020436
(43) Veröffentlichungstag der Anmeldung: 26.08.2015
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2013/002834
(87) Internationale Veröffentlichungsnummer: WO 2014/060062

(56) Entgegenhaltungen:
- WO-A1-2011/133044
- DE-A1- 4 116 160
- DE-A1-102010 035 084

## Beschreibung

Die Erfindung betrifft einen elektrischen Dämpfer für ein Kraftfahrzeug zur Dämpfung einer Relativbewegung zwischen zwei Bauteilen gemäß dem Oberbegriff des Anspruchs 1.

Die DE 10 2010 035 084 A1 beschreibt einen elektrischen Dämpfer für ein Kraftfahrzeug der eine Relativbewegung zwischen zwei Bauteilen dämpft. Der elektrische Dämpfer weist ein Gehäuse auf, wobei ein Stator in diesem Gehäuse festgelegt ist. Relativ zum Stator ist drehbar ein Rotor angeordnet, der Feldmagnete oder Induktionswicklungen aufweist. Durch die Drehung des Rotors gegenüber dem Stator wird in den Induktionswicklungen eine Spannung induziert, die den Rotor abbremst und dadurch dämpft. Die in der DE 10 2010 035 084 A1 vorgeschlagene Lösung hat den Nachteil, dass zur Generierung einer ausreichenden Dämpfungskraft eine hohe Relativgeschwindigkeit zwischen Rotor und Stator notwendig ist.

Die DE 41 16 160 A1 offenbart einen elektromagnetischen Retarder in Transverflussbauweise mit einer Welle und einen mit dieser drehfest verbundenen Rotor, der in seinem Umfangsbereich Dauermagneten aufweist. Ferner ist ein massiver Eisenstator vorgesehen, der frei von Wicklungen ist und die eingebrachte Energie durch direkte Wärmeabfuhr ableitet.

Die WO 2011/133044 A1 offenbart einen Drehbewegungsdämpfer, bei welchem sich magnetisch ausgerichtete Scheiben gegenüber einer drehfesten Ankerplatte drehen, wobei Wirbelströme in der Ankerplatte induziert werden, die der Drehbewegung entgegen wirken.

Dieses Problem wird in der Druckschrift dadurch gelöst, dass ein Getriebe zwischen dem angelenkten Bauteil und dem Generator vorgesehen ist. Durch die Verwendung eines Getriebes kann jedoch nur begrenzt die Drehzahl bzw. die Relativgeschwindigkeit der Rotordrehung erhöht werden.

Es ist Aufgabe der Erfindung, einen elektrischen Dämpfer für ein Kraftfahrzeug anzugeben, der eine ausreichende Dämpfung auch bei niedrigen Anregungsamplituden und einer niedrigen Dämpfergeschwindigkeit realisieren kann.

Die Aufgabe wird dadurch gelöst, dass der Stator wenigstens einen Spulenring aufweist, auf welchen segmentweise Spulenwicklungen angeordnet sind.

Ferner weist der Generator einen Stator und einen Rotor auf, der eine Rotorwelle umfasst, die mit wenigstens einer Rotorscheibe drehfest verbunden ist.

Erfindungsgemäß ist wenigstens ein Felderzeugungsmittelring von magnetisierbare Element, insbesondere ein ferromagnetischen Elementen vorgesehen, wobei die magnetisierbaren Elemente segmentweise angeordnet sind und die Elemente je mit einem Ende mit einem Felderzeugungsmittel verbunden sind. Die Nord-Süd Ausrichtung der Felderzeugungsmittel liegt orthogonal zur Rotorwelle. Die Polarität, welche die magnetisierbaren Elemente erhalten, ist derart gewählt, dass aneinandergrenzende Segmente eine unterschiedliche Polarität aufweisen. Ferner ist ein Spulenring vorgesehen, der segmentweise umlaufende Spulenwicklungen aufweist. Spulenring und Felderzeugungsmittelring sind konzentrisch angeordnet.

In einer dritten Ausführung können wenigstens zwei Spulenringe vorgesehen sein, die konzentrisch zur Rotorwelle und den ringförmig angeordneten Felderzeugungsmitteln angeordnet sind. Die Spulenringe weisen segmentweise umlaufende Spulenwicklungen auf. Der Radius Felderzeugungsmittelrings liegt zwischen den Spulenkreisradien der beiden Spulenringe.

Auf diese Weise ragt der Felderzeugungsmittelring in axialer Richtung zwischen die beiden Spulenringe hinein.

Eine Relativbewegung zwischen Stator und Rotor sorgt für eine Relativbewegung zwischen Felderzeugungsmittelring und den Spulenringen

Durch diese Anordnung wird bei Drehung der Rotorscheibe in beide benachbarten Spulenringe eine Spannung induziert, durch welche wiederum ein Magnetfeld erzeugt wird, welches der Drehung des Rotors entgegenwirkt und damit dies seine Bewegung dämpft. Aufgrund der gleichzeitigen Induktion in zwei Spulenringe wird die wirksame Feldänderung im Vergleich zum Stand der Technik deutlich erhöht.

Ferner können die Spulenringe an dem Stator und die magnetisierbaren Elemente auf wenigstens einem konzentrischen Kreisumfang an der Rotorscheibe angebracht sein. Ferner sind Felderzeugungsmittel an der Rotorscheibe angeordnet. Sie sind dabei so angeordnet, dass insbesondere in radialer Richtung gegenüberliegende magnetisierbare Elemente eine unterschiedliche Polarität aufweisen. Dies kann vorteilhaft durch die Verbindung der magnetisierbaren Elemente mit je einem Pol eines Felderzeugungsmittels erreicht werden. Dadurch kann der Einsatz von Felderzeugungsmitteln reduziert werden. Die magnetisierbaren Elemente können ferromagnetische Elemente sein. Vorzugsweise sind die magnetisierbaren Elemente weichmagnetisch.

Vorzugsweise liegen die Felderzeugungsmittelringradien in radialer Richtung zwischen den Spulenringradien.

In einer weiteren vorteilhaften Ausgestaltung der Erfindung sind wenigstens zwei Felderzeugungsmittelringe vorgesehen, welche zwischen drei Spulenringen angeordnet sind.

Bei Drehung der Spulenringe relativ zu den Felderzeugungsmittelringen wirkt das von den beiden benachbarten Felderzeugungsmittelringen erzeugte magnetische Feld auf den radial zwischenliegenden Spulenring in gleicher Richtung und wirkt auf diese Weise als Reihenschaltung.

Dadurch wird die Dämpfungseigenschaft bei kompakter Bauform deutlich erhöht. In einer weiteren vorteilhaften Ausführungsform sind die Felderzeugungsmittel als Permanentmagnete ausgebildet.

In einer weiteren vorteilhaften Ausführung der Erfindung sind die Spulenwicklungen der Spulenringe mit einem Widerstand verbunden. Über diesen Widerstand kann eine Dämpfung festgelegt werden. Über einen variablen Widerstand ist diese Dämpfung auf einfache Weise einstellbar. Die von dem Dämpfer gewonnene Energie kann vorteilhafter Weise im Fahrzeug weiter verwendet werden.

Ein weiterer Gedanke der Erfindung betrifft ein Fahrwerk umfassend einen Fahrwerkslenker und einen Fahrzeugaufbau die gegeneinander durch einen zuvor beschriebenen elektrischen Dämpfer miteinander verbunden sind.

Gemäß einer vorteilhaften Ausführungsform ist dabei der Stator mit seinem Gehäuse mit dem Fahrwerkslenker verbunden, wobei die Rotorwelle, welche vorzugsweise auf beiden Seiten des Stators herausragt beidseitig fest mit einem Fahrzeugaufbau verbunden ist. Durch die Wahl des Statorgehäuse kann dieses in idealer Weise an die Form des Lenkerauges angepasst werden, wodurch die Lenkerbewegung zu einer Relativbewegung zwischen Stator und Rotorwelle führt. Dadurch wird eine Bewegung des Fahrwerklenkers gegenüber dem Fahrzeugaufbau effektiv gedämpft.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine schematische Ansicht eines elektrischen Dämpfers in einer ersten Schnittansicht;
- Fig. 2: eine schematische Ansicht in einer zweiten Schnittansicht, und
- Fig. 3: eine Anordnung eines erfindungsgemäßen Generators in einem Fahrzeug.

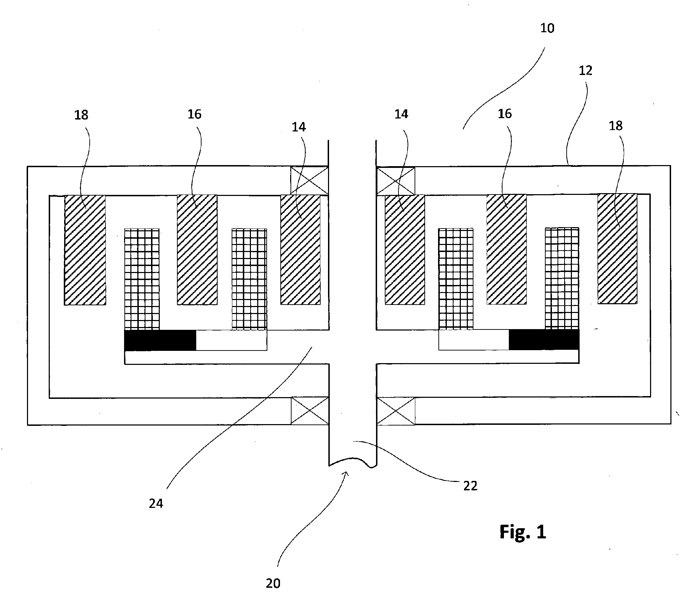

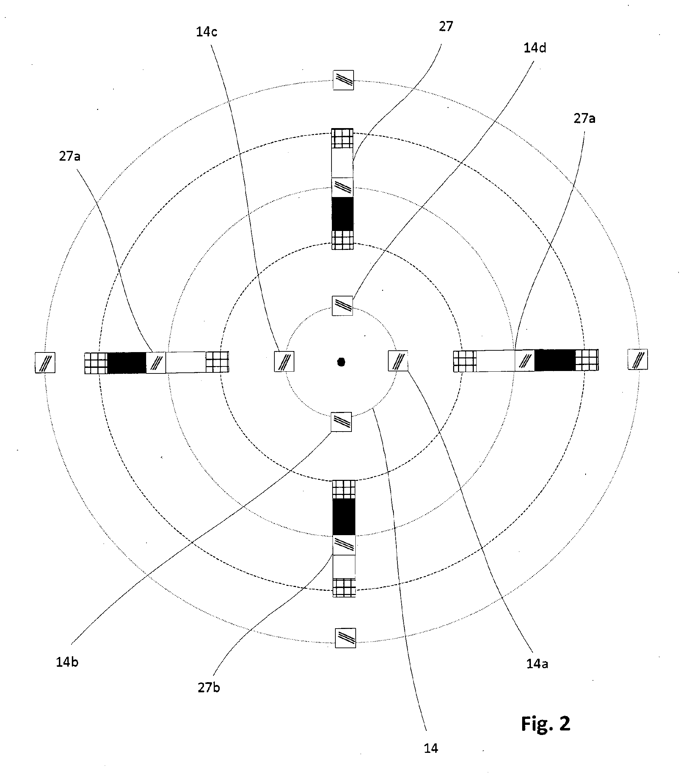

Fig. 1 zeigt eine schematische Darstellung eines elektrischen Dämpfers 10 mit einem Gehäuse 12 und einem Rotor 20, der eine Rotorwelle 22 und eine Rotorscheibe 24 aufweist. Der Rotor 20 ist drehbar im Gehäuse 12 gelagert. Am Gehäuse 12 sind ein erster Spulenring 14, ein zweiter Spulenring 16 und ein dritter Spulenring 18 angeordnet. Die Spulenringe 14, 16, 18 liegen konzentrisch zur Rotorwelle 22 und weisen unterschiedliche Radien auf. Die Spulenringe 14, 16, 18 sind derart ausgestaltet, dass in einem Ring segmentweise Spulenwicklungen 14a, 14b, 14c, 14d eingebracht sind, wie sie symbolisch in Fig. 2 dargestellt sind.

Zudem weist der elektrische Dämpfer 10 Weichmagnetringe auf. Die Weichmagnetringe sind derart gestaltet, dass umlaufend segmentweise Weichmagnetelemente angeordnet sind. Die zwei radial benachbarten Weichmagnetelemente sind mit in den Rotor 20 eingebrachten Permanentmagneten 27 verbunden. Da die Nord-Süd-Ausrichtung der Permanentmagnete orthogonal zur Rotorwelle 22 liegt, werden die Weichmagnete derart positioniert, dass deren Nord-Südausrichtung orthogonal zur Rotorwelle 22, 52 liegt. Für die verbundenen Weichmagnete ergibt sich, dass diese umlaufend mit abwechselnder Polarität angeordnet sind. Dies wird in Fig. 2 näher beschrieben. Durch die Drehung der Rotorwelle 22, gegenüber dem Gehäuse 12 und der daran befestigten Spulenringe 14, 16, 18 wird Spannung in die Spulenringe 14, 16, 18 induziert wodurch der Rotor 20 gebremst und dadurch die Bewegungen der angeschlossenen Bauteile gedämpft werden. Indem ein Magnetring zwischen zwei Spulenringen geführt wird, kann eine hohe Dämpfung bei niedrigem Einsatz von Permanentmagneten bereitgestellt werden.

Fig. 2 zeigt eine schematische Ansicht in einer Schnittansicht.

Gut zu erkennen ist die konzentrische Anordnung der Spulenringe 14, 16, 18 und Weichmagnetringe um die Rotorwelle 22. In diesem Ausführungsbeispiel sind im inneren Spulenring 14 die vier Spulen 14a, 14b, 14c, 14d angeordnet, wobei die einzelnen Spulen hier symbolisch dargestellt sind. Wie in Fig. 1 zu erkennen ist, sind die Spulen des Spulenrings 14, 16, 18 mit dem Gehäuse 12 verbunden. Gegenüber dem Gehäuse 12 drehbar gelagert, sind die Weichmagnete an der Rotorscheibe 24 angebracht. Permanentmagnete 27a, 27b, 27c, 27d und die Weichmagnete sind derart Weichmagnetring angeordnet, dass ihre magnetische Ausrichtung in radialer Richtung orthogonal zur Rotorwelle 22 liegt, und dass deren Polarität in aufeinander folgenden Segmenten abwechselt. Das für den Spulenring 14 und den Magnetring gesagte trifft auch auf die weiter außen liegenden Spulenringe 16, 18 und den Weichmagnetring zu. Durch die Erfindungsgemäße Anordnung können durch Einsatz von wenigen Permanentmagneten hohe Dämpfungswerte auch bei niedriger Drehzahl erzielt werden. Dadurch wird eine günstige Herstellung von elektrischen Dämpfern gewährleistet.

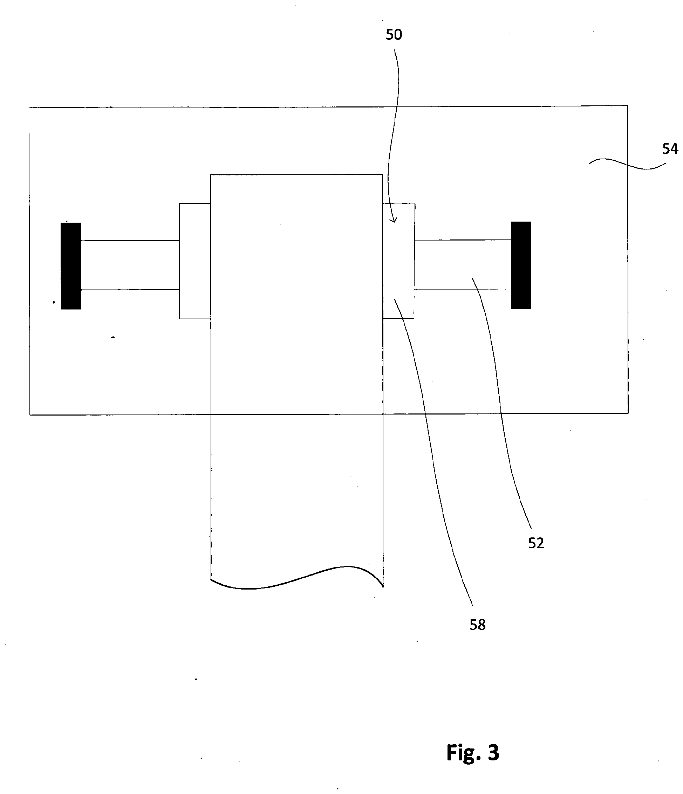

Fig. 3 zeigt eine Anordnung eines erfindungsgemäßen Generators (50) in einem Fahrzeug. Der Stator (58) ist mit einem Fahrwerkslenker und die Rotorwelle (52) mit dem Fahrzeugaufbau (54) verbunden.

### Bezugszeichenliste

- 10: elektrischer Dämpfer
- 12: Gehäuse
- 14: Spulenring
- 14a: Spulenwicklung
- 14b: Spulenwicklung
- 14c: Spulenwicklung
- 14d: Spulenwicklung
- 16: Spulenring
- 18: Spulenring
- 20: Rotor
- 22: Rotorwelle
- 24: Rotorscheibe
- 27a: Permanentmagnet
- 27b: Permanentmagnet
- 27c: Permanentmagnet
- 27d: Permanentmagnet
- 50: Generator
- 52: Rotorwelle
- 54: Fahrzeugaufbau
- 58: Stator

## Patentansprüche

1. Elektrischer Dämpfer (10) für ein Kraftfahrzeug zur Dämpfung einer Relativbewegung zwischen zwei Bauteilen mit einem durch die Relativbewegung antreibbaren elektrischen Generator (50) zur Erzeugung einer Induktionsspannung, wobei der Generator (50) einen Rotor (20) und einen Stator (58) aufweist, wobei der Rotor (20) eine Rotorwelle (22, 52) aufweist, die mit wenigstens einer Rotorschiebe (24) drehfest verbunden ist, **dadurch gekennzeichnet, dass** ein Felderzeugungsmittelring vorgesehen ist, in welchem segmentweise magnetisierbaren Elemente vorgesehen sind, die mit Felderzeugungsmitteln derart verbunden sind, dass die magnetisierbaren Elemente umlaufend abwechselnd polarisiert sind, und dass wenigstens ein Spulenring (14, 16, 18) mit segmentweise angeordneten Spulenwicklungen (14a, 14b, 14c, 14d) vorgesehen ist, wobei der Spulenring (14, 16, 18) und der Felderzeugungsmittelring konzentrisch angeordnet ist.

2. Elektrischer Dämpfer (10) nach Anspruch 1, **dadurch gekennzeichnet, dass** zwei Spulenringe vorgesehen sind, wobei der Radius des Felderzeugungsmittelrings zwischen den Spulenringradien liegt, und eine Relativbewegung zwischen Rotor (20) und Stator (58) eine Relativbewegung zwischen Felderzeugungsmittelring und den Spulenringen (14, 16, 18) zur Folge hat.

3. Elektrischer Dämpfer (10) nach Anspruch 1 oder 2, **dadurch gekennzeichnet, dass** die Rotorscheibe (24) den Felderzeugungsmittelring trägt.

4. Elektrischer Dämpfer (10) nach einem der Ansprüche 1 bis 3, **dadurch gekennzeichnet, dass** wenigstens zwei konzentrische Felderzeugungsmittelringe vorgesehen sind, die drehfest mit der Rotorwelle (22, 52) verbunden sind, wobei die Felderzeugungsmittel derart angeordnet sind, dass ein magnetisierbares Element, insbesondere ein magnetisierbares Element eines ersten Felderzeugungsmittelrings und ein radial benachbartes magnetisierbares Element eine unterschiedliche Polarität aufweisen.

5. Elektrischer Dämpfer (10) nach einem der vorangehenden Ansprüche, **dadurch gekennzeichnet, dass** die Felderzeugungsmittel als Permanentmagnete (27a, 27b, 27c, 27d) ausgebildet sind.

6. Elektrischer Dämpfer (10) nach einem der vorangehenden Ansprüche, **dadurch gekennzeichnet, dass** die Anschlüsse der Spulenwicklungen (14a, 14b, 14c, 14d) der Spulenscheibe an einen Widerstand angeschlossen sind.

7. Fahrwerk umfassend einen Fahrwerkslenker einen Fahrzeugaufbau und einen elektrischen Dämpfer (10) nach einem der vorangehenden Ansprüche, **dadurch gekennzeichnet, dass** der Stator (58) mit einem Fahrwerkslenker und die Rotorwelle (22, 52) mit einem Fahrzeugaufbau verbunden ist.

## Claims

1. Electrical damper (10) for a vehicle for damping a relative movement between two components with an electrical generator (50) driveable by the relative movement for generating an induction voltage, wherein the generator (50) has a rotor (20) and a stator (58), wherein the rotor (20) has a rotor shaft (22, 52) which is non-rotatably connected with at least one rotor disc (24), **characterised in that** a field generating means ring is provided in which magnetisable elements are segmentally provided which are connected with field generating means in such a way that the magnetisable elements are circumferentially polarised in turn and that at least one coil ring (14, 16, 18) is provided with segmentally disposed coil turns (14a, 14b, 14c, 14d), wherein the coil ring (14, 16, 18) and the field generating means ring is concentrically disposed.

2. Electrical damper (10) according to claim 1, **characterised in that** two coil rings are provided, wherein the radius of the field generating means ring lies between the coil ring radii, and a relative movement between rotor (20) and stator (58) results in a relative movement between the field generating means ring and the coil rings (14, 16, 18).

3. Electrical damper (10) according to claim 1 or 2, **characterised in that** the rotor disc (24) bears the field generating means ring.

4. Electrical damper (10) according to any of claims 1 to 3, **characterised in that** at least two concentric field generating means rings are provided which are connected in a non-rotatable manner with the rotor shaft (22, 52), wherein the field generating means are disposed in such a way that a magnetisable element, in particular a magnetisable element of a first field generating means ring, and a radially abutting magnetisable element have a different polarity.

5. Electrical damper (10) according to any of the preceding claims, **characterised in that** the field generating means are formed as permanent magnets (27a, 27b, 27c, 27d).

6. Electrical damper (10) according to any of the preceding claims, **characterised in that** the connections of the coil turns (14a, 14b, 14c, 14d) of the coil disc are connected to a resistance.

7. Chassis comprising a chassis link a vehicle body and an electrical damper (10) according to any of the preceding claims, **characterised in that** the stator (58) is connected with a chassis link and the rotor shaft (22, 52) is connected with a vehicle body.

## Revendications

1. Amortisseur (10) électrique pour un véhicule automobile servant à amortir un mouvement relatif entre deux composants avec un générateur (50) électrique pouvant être entraîné par le mouvement relatif, servant à produire une tension d'induction, dans lequel le générateur (50) présente un rotor (20) et un stator (58), dans lequel le rotor (20) présente un arbre de rotor (22, 52), qui est relié de manière solidaire en rotation à au moins un disque de rotor (24), **caractérisé en ce qu'**est prévu un anneau central de production de champ, dans lequel sont prévus des éléments pouvant être magnétisés par segments, qui sont reliés aux moyens de production de champ de telle manière que les éléments pouvant être magnétisés sont polarisés de manière alternée de manière périphérique, et qu'au moins un anneau de bobinage (14, 16, 18) avec des enroulements de bobinage (14a, 14b, 14c, 14d) disposés par segments est prévu, dans lequel l'anneau de bobinage (14, 16, 18) et l'anneau central de production de champ sont disposés de manière concentrique.

2. Amortisseur (10) électrique selon la revendication 1,
**caractérisé en ce que** deux anneaux de bobinage sont prévus, dans lequel le rayon de l'anneau central de production de champ se situe entre les rayons d'anneau de bobinage, et un mouvement relatif entre le rotor (20) et le stator (58) a pour conséquence un mouvement relatif entre l'anneau central de production de champ et les anneaux de bobinage (14, 16, 18).

3. Amortisseur (10) électrique selon la revendication 1 ou 2,
**caractérisé en ce que** le disque de rotor (24) supporte l'anneau central de production de champ.

4. Amortisseur (10) électrique selon l'une quelconque des revendications 1 à 3,
**caractérisé en ce que** sont prévus au moins deux anneaux centraux de production de champ concentriques, qui sont reliés de manière solidaire en rotation à l'arbre de rotor (22, 52), dans lequel les moyens de production de champ sont disposés de telle manière qu'un élément pouvant être magnétisé, en particulier un élément pouvant être magnétisé d'un premier moyen de production de champ et un élément pouvant être magnétisé adjacent radialement présentent une polarité différente.

5. Amortisseur (10) électrique selon l'une quelconque des revendications précédentes, **caractérisé en ce que** les moyens de production de champ sont réalisés sous la forme d'aimants permanents (27a, 27b, 27c, 27d).

6. Amortisseur (10) électrique selon l'une quelconque des revendications précédentes, **caractérisé en ce que** les raccords des enroulements de bobinage (14a, 14b, 14c, 14d) du disque de bobinage sont raccordés à une résistance.

7. Train de roulement comprenant un bras de train de roulement, une carrosserie de véhicule et un amortisseur (10) électrique selon l'une quelconque des revendications précédentes, **caractérisé en ce que** le stator (58) est relié à un bras de train de roulement et l'arbre de rotor (22, 52) est relié à une carrosserie de véhicule.
